# EUROPÄISCHE PATENTANMELDUNG

(11) **EP 4 789 911 A1**
(43) Veröffentlichungstag der Anmeldung: **12.08.2026**
(21) Anmeldenummer: 26157571.6
(22) Anmeldetag: 10.02.2026
(51) Int. Cl.: B60N 2/68

(54) **SITZUNTERBAU**

(30) Priorität: 11.02.2025 DE 102025104987
(71) Anmelder: Polytec Composites NL B.V., 4704 RG Roosendaal (NL)
(72) Erfinder: van Gilst, Walter, 4704 RG Roosendaal (NL); Pieper, Rainer, 49393 Lohne (DE); Alferink, Edwin, 49393 Lohne (DE)
(74) Vertreter: dompatent

(57) **Zusammenfassung**

Sitzunterbau gebildet aus einem Polymermaterial für eine Sitzeinrichtung, zur lastragenden Befestigung an einer Fahrzeugstruktur, aufweisend mindestens zwei Seitenwände und eine obere Auflagewand, wobei die mindestens zwei Seitenwände zusammen mit der oberen Auflagewand integral gefertigt sind und gemeinsam einen Hohlraum mit einer unteren, der oberen Auflagewand gegenüberliegenden, Öffnung zumindest teilweise umgrenzen, wobei die mindestens zwei Seitenwände mindestens abschnittsweise einen Befestigungsrand aufweisen zur lasttragenden Befestigung des Sitzunterbaus an der Fahrzeugstruktur und wobei die obere Auflagewand zur Aufnahme und Befestigung einer Sitzschale oder eines Sitzpolsters der Sitzeinrichtung ausgestaltet ist.

## Beschreibung

Die vorliegende Erfindung betrifft einen Sitzunterbau für eine Sitzeinrichtung, zur lasttragenden Befestigung an einer Fahrzeugstruktur.

Eine Sitzeinrichtung, bspw. ein Rücksitz oder eine Rücksitzbank, für einen Personenkraftwagen besteht üblicherweise aus einem Sitz und einer Lehne, wobei der Sitz einen Spannrahmen aus Metall oder Kunststoff umfasst. Auf dem Spannrahmen liegt typischerweise ein Formblock aus Weichschaum, wobei der Spannrahmen und der Weichschaum mit einer Polsterung umzogen werden und die Polsterung am Spannrahmen befestigt wird.

Bei herkömmlichen Personenkraftwagen mit Verbrennungsmotor, liegt der Sitz auf einer Erhebung der Fahrzeugstruktur, wobei die Erhebung ausgebildet ist zur Aufnahme des Kraftstofftanks.

Bei Personenkraftwagen ohne Verbrennungsmotor, bspw. Elektroautos, oder Personenkraftwagen mit erhöhter Bodenfreiheit, bspw. Sport Utility Vehicle (SUV), ist die Erhebung der Fahrzeugstruktur weniger stark ausgeprägt oder nicht vorhanden. Somit muss der Bereich unter dem Sitz durch einen lasttragenden Sitzunterbau aufgefüllt werden.

Aus dem Stand der Technik sind Sitzunterbauten insbesondere für Personenkraftwagen bekannt, die eine Schweißkonstruktion aus Stahlprofilen umfassen. Nachteilig bei diesen Sitzunterbauten sind das hohe Bauteilgewicht und der schlechte Komfort, insbesondere wenn keine zusätzlichen Blechteile verbaut sind. Zudem ist die Stahlherstellung energieintensiv und weist einen hohen CO2-Fußabdruck auf.

Alternativ können Sitzunterbauten aus einem EPP Hartschaumblock mit eingebetteter Stahlstruktur gefertigt werden. Durch die Einbettung der Stahlstruktur in den Hartschaumblock ist eine stoffliche Trennung von Schaum und Stahl anschließend nur schwer möglich, so dass die Nachhaltigkeit dieser Konstruktionen beeinträchtigt ist. Ferner ist die Herstellung solcher Sitzunterbauten mit hohen Kosten verbunden.

Beide Sitzunterbauten sind zudem für den spezifischen Anwendungszweck konstruiert und weisen darüber hinaus keine oder nur sehr eingeschränkte weitere funktionale Merkmale auf.

Ausgehend von den vorbezeichneten Nachteilen des Stands der Technik stellt sich die vorliegende Erfindung die Aufgabe einen Sitzunterbau bereitzustellen, wobei das Gewicht und die Herstellungskosten reduziert werden, die Nachhaltigkeit verbessert und weitere funktionale Verwendungen bereitgestellt werden.

Erfindungsgemäß gelöst wird die vorbezeichnete Aufgabe durch einen Sitzunterbau gebildet aus einem Polymermaterial für eine Sitzeinrichtung zur lasttragenden Befestigung an einer Fahrzeugstruktur. Der erfindungsgemäße Sitzunterbau weist mindestens zwei Seitenwände und eine obere Auflagewand auf, wobei die mindestens zwei Seitenwände zusammen mit der oberen Auflagewand integral gefertigt sind und gemeinsam einen Hohlraum mit einer runderen, der oberen Auflagewand gegenüberliegenden Öffnung zumindest teilweise umgrenzen; wobei die mindestens zwei Seitenwände mindestens Abschnittsweise einen Befestigungsrand aufweisen zur lasttragenden Befestigung des Sitzunterbaus an der Fahrzeugstruktur und wobei die obere Auflagewand zur Aufnahme und Befestigung einer Sitzschale oder eines Sitzpolsters der Sitzeinrichtung ausgestaltet ist.

Die obere Auflagewand weist eine dem Hohlraum zugewandte Unterseite und eine gegenüberliegende der Umgebung zugewandte Oberseite auf. Bevorzugt ist die obere Auflagewand als durchgehend vollständig geschlossene Oberfläche, insbesondere ohne Durchbrechungen, ausgebildet.

Bei der lasttragenden Befestigung kann es sich erfindungsgemäß um eine werkzeuglos trennbare Befestigung bzw. lösbare Verbindung handeln, erfindungsgemäß können jedoch auch Befestigungsarten vorgesehen werden, bei welchen der erfindungsgemäße Sitzunterbau über mindestens ein Befestigungselement an einer Fahrzeugstruktur lasttragend befestigt ist beziehungsweise kann eine Verschraubung, Vernietung oder eine Klebung des Sitzunterbaus mit der Fahrzeugstruktur erfindungsgemäß vorgesehen werden. Unter dem erfindungsgemäß verwendeten Begriff des Fahrzeugs soll im Rahmen der vorliegenden Erfindung eben auch Flugzeuge, Schiffe, Züge und Autos verstanden werden. Unter dem Begriff der Sitzeinrichtung soll im Rahmen der vorliegenden Erfindung ein Einzelsitz, beispielsweise ein Fahrer- oder Beifahrersitz verstanden werden, bei der Sitzeinrichtung kann es sich jedoch beispielsweise auch um eine Sitzbank handeln, worauf mehrere Personen Platz nehmen können wie beispielsweise um eine Rücksitzbank.

Hierbei ist die untere Öffnung des bevorzugt wannenförmigen Hohlraums einer unteren Befestigungsstruktur zugewandt, insbesondere einer Fahrzeugstruktur zugewandt.

Bevorzugt erstrecken sich die mindestens zwei Seitenwände quer oder orthogonal zu der oberen Auflagewand. Bevorzugt weist der erfindungsgemäße Seitzunterbau vier Seitenwände auf, welche integral mit der oberen Auflagewand ausgebildet sind und mit dieser einen wannenförmigen Hohlraum grenzen. Vorzugsweise erstrecken sich die vier Seitenwände von der oberen Auflagewand bis zu einer unteren Befestigungsstruktur, insbesondere einer Fahrzeugstruktur.

Weiterhin bevorzugt kann die obere Auflagewand eine Mulde aufweisen, welche durch einen relativ zum Hohlraum konvex gekrümmten Wandlungslauf der oberen Auflagewand zur Aufnahme und Befestigung einer Sitzschale oder eines Sitzpolsters der Sitzeinrichtung und eine gegenüber der Mulde erhöhte Ebene ausgebildet wird, sodass ein Verrutschen des Sitzpolsters oder der Sitzschale gegenüber der Mulde verhindert wird.

Erfindungsgemäß ist es insbesondere vorgesehen, dass bei einer Sitzanordnung in Fahrtrichtung die Mulde hinter der erhöhten Ebene angeordnet ist. Es kann vorgesehen werden, dass die mindestens eine Seitenwand und/oder die obere Auflagewand von der jeweiligen Wandung quer abstehende Rippen umfasst, besonders bevorzugt in den Hohlraum gegenüber der jeweiligen Wandung quer abstehende Rippen aufweist, wobei die Rippen zur Erhöhung der Biegesteifigkeit der jeweiligen Wand vorgesehen sind. Die Rippen können dabei besonders bevorzugt orthogonal von der Wandung abstehend ausgebildet werden. Weiterhin kann es vorgesehen werden, dass die Rippen insbesondere als Wabenstruktur und/oder offene Kastenstruktur hohlraumseitig ausgebildet sind. Gemäß einer besonders bevorzugten Ausführungsform können die Rippen erfindungsgemäß integral mit der jeweiligen Wand ausgebildet werden.

Es kann vorgesehen werden, dass in der mindestens einen Seitenwand und/oder in der oberen Auflagewand Sicken oder Profilierungen insbesondere integral ausgebildet werden. Durch die Ausbildung von Sicken oder Profilierungen in der jeweiligen Wand kann die Biegesteifigkeit der jeweiligen Wand erhöht werden.

Besonders bevorzugt kann das den Sitzunterbau ausbildende Polymermaterial aus einem faserverstärkten, besonders bevorzugt aus einem langfaserverstärkten thermoplastischen Kunststoffmaterial ausgebildet werden.

Erfindungsgemäß können die mindestens zwei Seitenwände und/oder die obere Auflagewand zumindest teilweise aus einem faserverstärkten thermoplastischen Polymermaterial ausgebildet werden. Die Wandungen können dabei beispielsweise in einem Spritzgussverfahren urgeformt werden, wobei die Fasern zur Verstärkung des Polymermaterials beispielsweise während des Spritzgussprozesses dem verflüssigten thermoplastischen Kunststoffmaterial zugegeben werden können. Alternativ kann es auch vorgesehen werden, dass die mindestens eine Seitenwand und/oder die obere Auflagewand aus mindestens einer Schicht eines faserverstärkten Kunsttoffhalbzeugs, besonders bevorzug aus mehreren Schichten eines faserverstärkten Kunststoffmaterials ausgebildet werden, welche innerhalb einer Werkzeugkavität in einem Pressverfahren konsolidiert und in die gewünschte Form gebracht werden können.

Erfindungsgemäß kann es auch vorgesehen werden, dass der Sitzunterbau zumindest in Teilbereichen mindestens einer Seitenwand und/oder der Auflagewandverstärkungsschichten aus einem faserverstärkten thermoplastischen Kunststoffmaterial aufweist, insbesondere unidirektionale Tapes oder Glasgewebelagen.

Bevorzugt kann es vorgesehen werden, dass ausgehend von einer dem Hohlraum zugewandten Unterseite der oberen Auflagewand zur Fahrzeugstruktur mindestens eine hervorstehende Stützstruktur ausgebildet ist zur Kraftübertragung zwischen der oberen Auflagewand des Sitzunterbaus und der Fahrzeugstruktur.

Vorzugsweise ist die mindestens eine Stützstruktur als Säule oder als stumpfer Kegel ausgebildet und insbesondere integral aus der oberen Auflagewand ausgeformt. Besonders bevorzugt kann eine derartige Stützstruktur beispielsweise als Hohlsäule integral mit der oberen Auflagewand ausgebildet werden, wobei die obere Auflagewand in dem Bereich der Hohlsäule tiefgezogen ist.

Bevorzugt kann es vorgesehen werden, dass die mindestens eine Stützstruktur hohl ausgebildet ist und gegenüber der oberen Abdeckwand im Bereich der Öffnung Befestigungspunkte aufweist zur Verbindung des Sitzunterbaus mit der Fahrzeugstruktur.

Besonders bevorzugt wird der Sitzunterbau zusätzlich über die Stützstruktur lasttragend mit der Fahrzeugstruktur verbunden, insbesondere lösbar mit dieser verbunden.

Erfindungsgemäß vorgesehen wird, dass mindestens eine Seitenwand und/oder die obere Auflagewand auf der dem Hohlraum zugewandten Oberfläche Aufnahmestrukturen zur Anordnung und/oder Befestigung von Zusatzkomponenten aufweist, beispielsweise zur Aufnahme von Lautsprechern oder einer Einrichtung zur Kühlung der Sitzeinrichtung.

Gemäß einer bevorzugten Ausführungsform kann es vorgesehen werden, dass der Hohlraum ein Ablagefach und/oder mindestens ein Trennelement aufweist, insbesondere ein längliches Ablagefach, welches zur Aufnahme von Gegenständen ausgebildet ist.

In dem Ablagefach können Gegenstände wie beispielsweise Regenschirme, Verbandskästen, Warndreiecke, etc. erfindungsgemäß untergebracht werden.

Das mindestens eine Trennelement kann beispielsweise als zusätzliche Wandung des Hohlraums ausgebildet werden, welche zwischen zwei Seitenwänden verläuft und den Hohlraum bevorzugt in mehrere Teilräume untergliedert. Das vorbezeichnete Trennelement kann wiederum integral mit mindestens einer Seitenwand und/oder der oberen Ablagewand lasttragend bevorzugt integral ausgebildet werden. Erfindungsgemäß kann es jedoch auch vorgesehen werden, dass das Ablagefach und/oder das Trennelement lasttragend verbunden ist mit mindestens einer Seitenwand und/oder der oberen Ablagewand, beispielsweise mit dieser Trennwand verclipst oder bevorzugt integral mit der Wandung ausgebildet ist.

Weiterhin kann es bevorzugt vorgesehen werden, dass mindestens eine Seitenwand und/oder die obere Auflagewand mindestens eine Materialaussparung aufweist, welche in den Hohlraum führt.

Weiterhin kann es vorgesehen werden, dass in dem Hohlraum mindestens ein Schubladenelement angeordnet und an dem Sitzunterbau befestigt ist, wobei das Schubladenelement durch mindestens eine Materialaussparung in mindestens einer Seitenwandung ausgezogen werden kann.

Weiterhin kann bevorzugt im Hohlraum eine ausziehbare Trittstufe angeordnet werden, wobei die Trittstufe durch eine Materialaussparung in einer Seitenwandung ausgezogen oder ausgefahren werden kann.

In einer bevorzugten Fortbildung der vorliegenden Erfindung kann an einer Seitenwand eine ausklappbare Trittstufe angeordnet werden.

Es kann vorgesehen werden, dass der Sitzunterbau zusätzliche eine Befestigungseinrichtung für die Sitzeinrichtung insbesondere für die Befestigung eines Stützrahmens der Sitzeinrichtung aufweist, besonders bevorzugt mindestens eine Verrastungs- oder Verclipsungseinrichtung.

Besonders bevorzugt kann es vorgesehen werden, dass der Sitzunterbau zusätzlich eine Befestigungseinrichtung für die lasttragende Befestigung des Sitzunterbaus an der Fahrzeugstruktur aufweist, insbesondere mindestens eine Verrastungs- oder Verclipsungseinrichtung. Hierzu weist der Sitzunterbau an einer dem Hohlraum abgewandten Oberfläche an mindestens einer Seitenwand und/oder der oberen Auflagewand insbesondere Erhebungen und/oder Vertiefungen mit Materialaussparungen auf zur Verrastung oder Aufnahme von Clipsen. Besonders bevorzugt sind die Erhebungen und/oder Vertiefungen ausgebildet zur Einführung eines Federstahldrahtes für die Verbindung des Sitzunterbaus mit einem Sitzrahmen.

Erfindungsgemäß kann es auch vorgesehen werden, dass in die mindestens eine Auflagewand und/oder in die mindestens eine Seitenwand Gewindeeinsätze eingebettet oder daran befestigt sind, zur Befestigung der Sitzeinrichtung an dem Sitzunterbau und/oder zur Befestigung des Sitzunterbaus an der Fahrzeugstruktur.

Gemäß einer bevorzugten Weiterbildung kann der Sitzunterbau zusätzlich geometrische Elemente aufweisen zur Befestigung eines Sitzbezugs und/oder eines Polsters der Sitzeinrichtung. Weiterhin kann es vorgesehen werden, dass der Sitzunterbau zusätzlich Befestigungselemente aufweist, welche im Bereich der oberen Auflagewand und/oder der mindestens einen Seitenwand eingebettet oder daran befestigt sind zur lasttragenden Befestigung eines zusätzlichen Gegenstands wie beispielsweise eines Kindersitzes. Derartige Befestigungselemente können beispielsweise zur Befestigung eines Isofixpunktes vorgesehen werden.

Es zeigen:
Fig 1 eine schematische perspektivische Ansicht eines Sitzunterbaus von oben gemäß einer ersten beispielhaften Ausführungsform der vorliegenden Erfindung;
Fig. 2A eine schematische perspektivische Ansicht eines Sitzunterbaus von unten gemäß einer zweiten beispielhaften Ausführungsform der vorliegenden Erfindung;
Fig. 2B eine schematische perspektivische Ansicht eines Sitzunterbaus mit zwei Lautsprechern gemäß der bevorzugten Ausführungsform aus Fig. 2A der vorliegenden Erfindung;
Fig. 3 eine schematische perspektivische Ansicht eines Sitzunterbaus von unten mit einem Ablagefach gemäß einer dritten beispielhaften Ausführungsform der vorliegenden Erfindung;
Fig. 4A eine schematische Darstellung einer Verclipsung mit einem Federstahldraht gemäß einer bevorzugten Ausführungsform der vorliegenden Erfindung;
Fig. 4B eine schematische Darstellung einer Befestigungseinrichtung mit einem Federstahldraht gemäß einer bevorzugten Ausführungsform der vorliegenden Erfindung;
Fig. 5 eine schematische Darstellung eines Sitzunterbaus mit zusätzlich Befestigungselementen gemäß einer bevorzugten Ausführungsform der vorliegenden Erfindung;

### Bezugszeichenliste:

- 1: Sitzunterbau
- 10: Auflagewand
- 12: Mulde
- 14: Sicke
- 16: Stützstruktur
- 18: Befestigungseinrichtung
- 20: Seitenwand
- 22: Befestigungsrand
- 24: Materialaussparung
- 26: Befestigungspunkte
- 28: Öffnung
- 30: Hohlraum
- 32: Ablagefach
- 34: Gegenstand
- 36: Aufnahmestruktur
- 38: Lautsprecher
- 40: Federstahldraht
- 42: Erhebung
- 44: Vertiefung
- 46: Befestigungselemente
- 50: Sitzrahmen

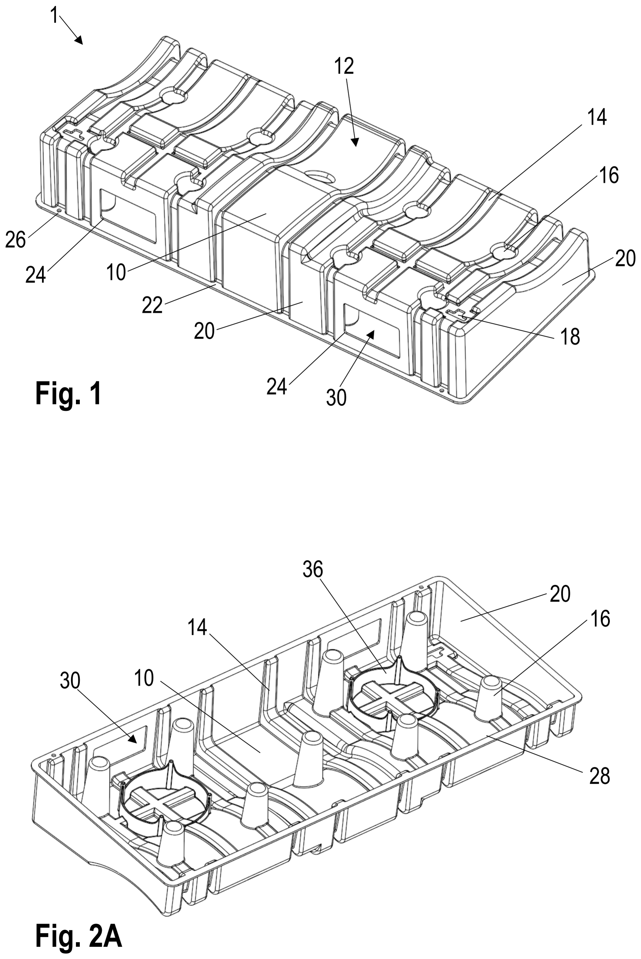

Wie in Fig. 1 gezeigt, weist ein Sitzunterbau 1 für eine Sitzeinrichtung gemäß der vorliegenden Erfindung mindestens zwei Seitenwände 20 und eine obere Auflagewand 10 auf, wobei die mindestens zwei Seitenwände 20 zusammen mit der oberen Auflagewand 10 integral aus einem Polymermaterial gefertigt sind. In der dargestellten beispielhaften Ausführungsform weist der Sitzunterbau 1 vier Seitenwände 20 und eine obere Auflagewand 10 auf. Die mindestens zwei Seitwände 20 umschließen gemeinsam mit der Auflagewand 10 einen Hohlraum 30. Die mindestens zwei Seitenwände 20 weisen, mindestens abschnittsweise, einen Befestigungsrand 22 auf, zur lasttragenden Befestigung des Sitzunterbaus 1 an der Fahrzeugstruktur. Hierfür kann der Befestigungsrand 22 Befestigungspunkte 26 aufweisen, zur lösbaren Verbindung mit der Fahrzeugstruktur, bspw. für eine lasttragende Verschraubung. Darüber hinaus weist die obere Auflagewand 10 eine Mulde 12 auf, gebildet durch einen relativ zum Hohlraum 30 konvex gekrümmten Wandungsverlauf der oberen Auflagewand 10 zur Aufnahme und Befestigung einer Sitzschale oder eines Sitzpolsters der Sitzeinrichtung, und eine gegenüber der Mulde 12 erhöhte Ebene. An mindestens einer Seitenwand 20 und der obere Auflagewand 10 sind integral ausgebildete Sicken oder Profilierungen 14 ausgebildet, zur Erhöhung der Biegesteifigkeit der jeweiligen Wand. Darüber hinaus kann die Auflagewand 10 eine hervorstehende Stützstruktur 16 zur Fahrzeugstruktur hin ausbilden, wobei die Stützstruktur 16 beispielsweise als Hohlsäule integral mit der oberen Auflagewand 10 ausgebildet ist und insbesondere die obere Auflagewand 10 in dem Bereich der Hohlsäule tiefgezogen ist.

Erfindungsgemäß kann der Sitzunterbau 1 an mindestens einer Seitenwand 20 und/oder der oberen Auflagewand 10 mindestens eine Materialaussparung 24 in den Hohlraum 30 aufweisen, so dass der Hohlraum 30 von außen durch die mindestens eine Materialaussparung 24 zugänglich ist. Hierbei kann die Materialaussparung 24 bspw. für das Herausziehen eines Schubladenelementes genutzt werden. Insbesondere können Materialaussparungen 24 an der einer Fahrzeugtür zugewandten Seite für das Herausziehen einer Trittstufe genutzt werden, für den erleichterten Einstieg in das Fahrzeug oder für eine bessere Zugänglichkeit des Fahrzeugdaches, bspw. für auf dem Dach angeordnete Trägersysteme oder Gepäckaufbewahrungen.

In der gezeigten Ausführungsform der Fig. 1 weist der Sitzunterbau 1 zusätzlich eine Befestigungseinrichtung 18 für die Sitzeinrichtung, insbesondere für Befestigung eines Sitzrahmens der Sitzeinrichtung, auf, wobei die Befestigungseinrichtung 18 bevorzugt mindestens eine Verrastungs- oder Verklipsungsvorrichtung umfasst.

In einer bevorzugten Ausführungsform kann das den Sitzunterbau 1 ausbildende Polymermaterial aus einem faserverstärkten, besonders bevorzugt aus einem langfaserverstärkten thermoplastischen Kunststoffmaterial ausgebildet werden. Insbesondere können zumindest Teilbereiche mindestens einer Seitenwand 20 und/oder der Auflagewand 10 Verstärkungsschichten aus einem faserverstärktem thermoplastischen Kunststoffmaterial aufweisen, insbesondere unidirektionale Tapes oder Glasgewebelagen.

Fig. 2A zeigt gemäß einer bevorzugten Ausführungsform eine untere, der oberen Auflagewand 10 gegenüberliegende Öffnung 28, wobei die Öffnung 28 eingegrenzt wird von der oberen Auflagewand 10 und den Seitenwänden 20. Weiterhin ist ausgehend von einer dem Hohlraum 30 zugewandten Unterseite der oberen Auflagewand 10 zur Fahrzeugstruktur eine hervorstehende Stützstruktur 16 ausgebildet zur Kraftübertragung zwischen der oberen Auflagewand des Sitzunterbaus und der Fahrzeugstruktur. Bevorzugt kann die Stützstruktur 16 als Säule oder als stumpfer Kegel ausgebildet sein und gegenüber der oberen Abdeckwand 10 im Bereich der Öffnung 28 Befestigungspunkte aufweisen zur Verbindung des Sitzunterbaus 1 mit der Fahrzeugstruktur.

Darüber hinaus weist Fig. 2A gemäß einer zweiten beispielhaften Ausführungsform an der oberen Auflagewand 10 auf der dem Hohlraum 30 zugewandten Oberfläche Aufnahmestrukturen 36 auf, zur Anordnung und/oder Befestigung von Zusatzkomponenten. Alternativ oder zusätzlich können die Aufnahmestrukturen 36 auch an den Seitenwänden 20 angeordnet sein. Bevorzugt weist der Sitzunterbau 1 im Bereich der Aufnahmestrukturen 36 zusätzliche Versteifungselemente auf, bspw. Rippen oder Sicken 14.

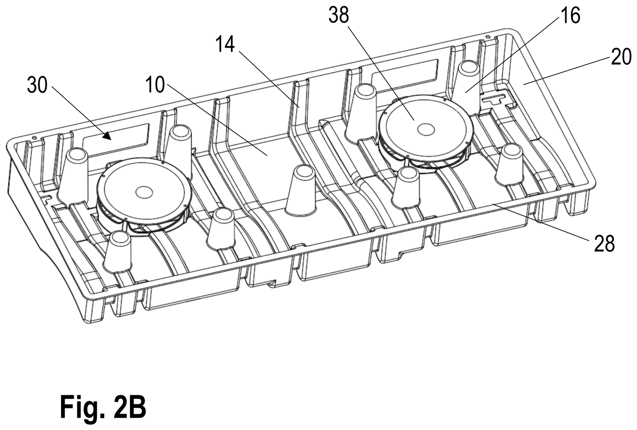

Wie in einer weiteren bevorzugten Ausführungsform in Fig. 2B gezeigt, können beispielsweise die Aufnahmestrukturen 36 ausgebildet sein zur Aufnahme von Lautsprechern 38. Alternativ oder zusätzlich kann durch die Aufnahmestrukturen 36 auch eine Einrichtung zur Kühlung der Sitzeinrichtung aufgenommen werden.

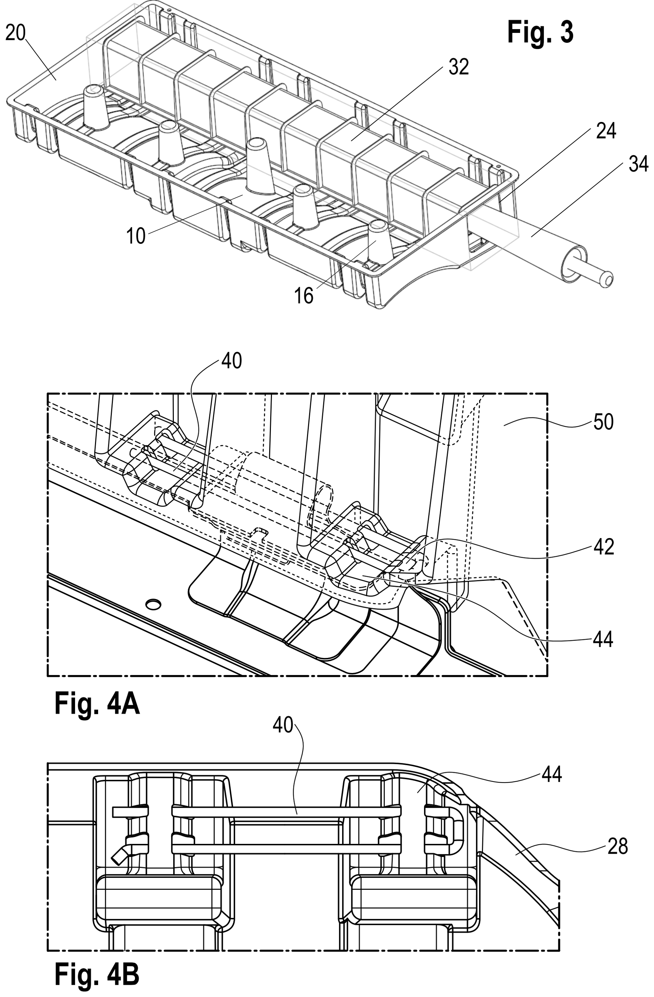

Fig. 3 zeigt gemäß einer bevorzugten Ausführungsform ein im Hohlraum 30 angeordnetes Ablagefach 32 mit einer seitlichen Materialaussparung 24. Das Ablagefach 32 ist insbesondere länglich ausgebildet zur Aufnahme von Gegenständen34, bspw. eines Regenschirms. Alternativ kann das Ablagefach 32 auch eine eher rechteckige oder quadratische Grundfläche aufweisen, bspw. zur Aufnahme eines Verbandskastens. Die Materialaussparung 24 kann bspw. mit einer Klappe oder einem Deckel verschlossen werden. In der gezeigten Ausführungsform kann das Ablagefach 32 die Stützstruktur 16 ergänzen oder teilweise anstelle der Stützstruktur 16 im Hohlraum ausgebildet sein. Hierbei kann das Ablagefach 32 auch Befestigungspunkte aufweisen, zur Verbindung des Sitzunterbaus 1 mit der Fahrzeugstruktur.

Fig. 4A zeigt gemäß einer bevorzugten Ausführungsform eine Verbindung des Sitzunterbaus 1 mit einem Sitzrahmen 50. Hierbei sind Erhebungen 42 und Vertiefungen 44 an der dem Hohlraum 30 gegenüberliegenden Oberfläche der oberen Auflagewand 10 ausgebildet. Besonders bevorzugt sind die Erhebungen 42 und Vertiefungen 44 mit Materialaussparungen ausgebildet zur Einführung eines Federstahldrahtes 40 für die Verbindung des Sitzunterbaus 1 mit einem Sitzrahmen.

Fig 4B zeigt in einer weiteren bevorzugten Ausführungsform eine Befestigungseinrichtung für den Sitzunterbau 1 mit der Fahrzeugstruktur. Hierbei weist der Sitzunterbau an der Öffnung 28 des Hohlraumes 30 Vertiefungen 44 mit Öffnungen auf, wobei die Vertiefungen bevorzugt ausgebildet sind zur Einführung eines Federstahldrahtes 40 für die Verbindung des Sitzunterbaus 1 mit der Fahrzeugstruktur.

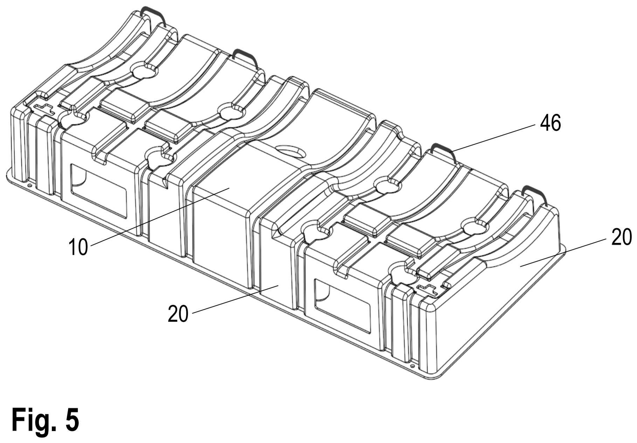

Fig. 5 zeigt in einer bevorzugten Ausführungsform einen Sitzunterbau 1, wobei der Sitzunterbau 1 zusätzlich Befestigungselemente 46 aufweist. Die Befestigungselement 46 sind im Bereich der oberen Auflagewand 10 angeordnet zur Befestigung eines zusätzlichen Gegenstandes, wie beispielsweise eines Kindersitzes. Alternativ oder zusätzlich können die Befestigungselemente auch auf mindestens einer Seitenwand 20 angeordnet oder eingebettet sein, bspw. zur Befestigung von Ladungssicherungselementen.

## Patentansprüche

1. Sitzunterbau (1) gebildet aus einem Polymermaterial für eine Sitzeinrichtung, zur lastragenden Befestigung an einer Fahrzeugstruktur, aufweisend:
- mindestens zwei Seitenwände (20); und
- eine obere Auflagewand (10);
wobei die mindestens zwei Seitenwände (20) zusammen mit der oberen Auflagewand (10) integral gefertigt sind und gemeinsam einen Hohlraum (30) mit einer unteren, der oberen Auflagewand (10) gegenüberliegenden, Öffnung (28) zumindest teilweise umgrenzen;
wobei die mindestens zwei Seitenwände (20), mindestens abschnittsweise, einen Befestigungsrand (22) aufweisen zur lasttragenden Befestigung des Sitzunterbaus (1) an der Fahrzeugstruktur; und
wobei die obere Auflagewand (10) zur Aufnahme und Befestigung einer Sitzschale oder eines Sitzpolsters der Sitzeinrichtung ausgestaltet ist.

2. Sitzunterbau (1) nach Anspruch 1, aufweisend vier Seitenwände (20), welche integral mit der oberen Auflagewand (10) ausgebildet sind und mit dieser einen wannenförmigen Hohlraum umgrenzen.

3. Sitzunterbau (1) nach Anspruch 1, wobei die obere Auflagewand (10) eine Mulde (12) aufweist, gebildet durch einen relativ zum Hohlraum (30) konvex gekrümmten Wandungsverlauf der oberen Auflagewand (10) zur Aufnahme und Befestigung einer Sitzschale oder eines Sitzpolsters der Sitzeinrichtung, und eine gegenüber der Mulde (12) erhöhte Ebene, so dass ein Verrutschen des Sitzpolsters gegenüber der Mulde (12) verhindert wird.

4. Sitzunterbau (1) nach einem der Ansprüche 1 bis 3, wobei (i) mindestens eine Seitenwand (20) und/oder die obere Auflagewand (10) von der jeweiligen Wandung quer abstehende Rippen umfasst, besonders bevorzugt in den Hohlraum (30) gegenüber der jeweiligen Wandung quer abstehende Rippen aufweist, zur Erhöhung der Biegesteifigkeit der jeweiligen Wand und/oder (ii) in der mindestens einen Seitenwand (20) und/oder in der oberen Auflagewand Sicken oder Profilierungen insbesondere integral ausgebildet sind.

5. Sitzunterbau (1) nach einem der vorausgehenden Ansprüche, wobei das Polymermaterial aus einem faserverstärktem, bevorzugt einem langfaserverstärkten Thermoplast ausgebildet ist.

6. Sitzunterbau (1) nach einem der vorausgehenden Ansprüche, wobei der Sitzunterbau (1) zumindest in Teilbereichen mindestens einer Seitenwand (20) und/oder der Auflagewand Verstärkungsschichten aus einem faserverstärkten Thermoplastischen Kunststoffmaterial aufweist, insbesondere unidirektionale Tapes oder Glasgewebelagen umfasst.

7. Sitzunterbau (1) nach einem der vorausgehenden Ansprüche, wobei ausgehend von einer dem Hohlraum (30) zugewandten Unterseite der oberen Auflagewand (10) zur Fahrzeugstruktur mindestens eine hervorstehende Stützstruktur (16) ausgebildet ist zur Kraftübertragung zwischen der oberen Auflagewand (10) des Sitzunterbaus (1) und der Fahrzeugstruktur.

8. Sitzunterbau (1) nach Anspruch 7, wobei die mindestens eine Stützstruktur (16) hohl ausgebildet ist und gegenüberliegend der oberen Abdeckwand im Bereich der Öffnung Befestigungspunkte aufweist zur Verbindung des Sitzunterbaus (1) mit der Fahrzeugstruktur.

9. Sitzunterbau (1) nach einem der vorausgehenden Ansprüche, wobei mindestens eine Seitenwand (20) und/oder die obere Auflagewand (10) auf der dem Hohlraum (30) zugewandten Oberfläche Aufnahmestrukturen zur Anordnung und/oder Befestigung von Zusatzkomponenten aufweist, beispielsweise zur Aufnahme von Lautsprechern (38) oder einer Einrichtung zur Kühlung der Sitzeinrichtung.

10. Sitzunterbau (1) nach einem der vorausgehenden Ansprüche, wobei der Hohlraum (30) ein Ablagefach (32) und/oder mindesten ein Trennelement aufweist, insbesondere ein längliches Ablagefach, zur Aufnahme von Gegenständen.

11. Sitzunterbau (1) nach einem der vorausgehenden Ansprüche, wobei mindestens eine Seitenwand (20) und/oder die obere Auflagewand (10) mindestens eine Materialaussparung (24) in den Hohlraum (30) aufweist.

12. Sitzunterbau (1) nach einem der Anspruch 11, wobei in dem Hohlraum (30) mindestens ein Schubladenelement angeordnet und an dem Sitzunterbau (1) befestigt ist, wobei das Schubladenelement durch mindestens eine Materialaussparung (24) in mindestens einer Seitenwand (20) ausgezogen werden kann.

13. Sitzunterbau (1) nach einem der vorausgehenden Ansprüche, wobei (i) im Hohlraum (30) eine ausziehbare Trittstufe angeordnet ist, wobei die Trittstufe durch eine Materialaussparung (24) in einer Seitenwand (20) ausgezogen oder ausgefahren werden kann und/oder (ii) an einer Seitenwand (20) eine ausklappbare Trittstufe angeordnet ist.

14. Sitzunterbau (1) nach einem der vorausgehenden Ansprüche, wobei der Sitzunterbau (1) zusätzlich eine Befestigungseinrichtung (18) für die Sitzeinrichtung insbesondere für Befestigung eines Sitzrahmens (50) der Sitzeinrichtung aufweist, insbesondere mindestens eine Verrastungs- oder Verklipsungsvorrichtung.

15. Sitzunterbau (1) nach einem der vorausgehenden Ansprüche, wobei der Sitzunterbau (1) zusätzlich eine Befestigungseinrichtung (18) für die lasttragende Befestigung des Sitzunterbaus (1) an der Fahrzeugstruktur aufweist, insbesondere mindestens eine Verrastungs- oder Verklipsungsvorrichtung.
